# EUROPEAN PATENT SPECIFICATION

(11) **EP 3 725 568 B1**
(45) Date of publication and mention of the grant of the patent: **05.03.2025**
(21) Application number: 18889722.7
(22) Date of filing: 04.07.2018
(51) Int. Cl.: B60C 19/08

(54) **PNEUMATIC TIRE**
LUFTREIFEN
BANDAGE PNEUMATIQUE

(30) Priority: 13.12.2017 JP 2017238967
(43) Date of publication of application: 21.10.2020
(73) Proprietor: Bridgestone Corporation, Chuo-Ku Tokyo 104-8340 (JP)
(72) Inventor: FUJIWARA, Yujiro, Tokyo 104-8340 (JP)
(74) Representative: Marks & Clerk LLP
(86) International application number: PCT/JP2018/025412
(87) International publication number: WO 2019/116615

(56) References cited:
- EP-A1- 1 803 589
- EP-A1- 1 997 653
- EP-A1- 2 014 488
- EP-A1- 2 738 022
- WO-A1-2017/122509
- WO-A1-2017/122509
- WO-A1-2017/122821
- WO-A1-2018/011001
- JP-A- 2009 040 331
- JP-A- 2009 154 608
- JP-A- 2013 193 577
- JP-A- 2013 528 525
- JP-A- 2014 133 467
- JP-A- 2014 180 868
- JP-A- 2015 123 900
- JP-A- 2016 033 000
- JP-U- S60 182 204
- US-A1- 2005 087 275
- US-A1- 2009 114 321

## Description

### TECHNICAL FIELD

The present invention relates to a pneumatic tire (hereinafter, also simply referred to as "tire"). More specifically, the present invention relates to a pneumatic tire for a passenger vehicle, particularly a pneumatic radial tire, which has an improved electrical conductivity.

### BACKGROUND ART

In recent years, with an increasing demand for fuel efficiency of tires, attempts have been made to reduce the rolling resistance of a tire by applying a low-loss rubber composition to the tire. From the standpoint of reducing the rolling resistance of a tire, it is advantageous to apply a low-loss rubber composition to various case members constituting the tire, in addition to a low-loss tread rubber.

Meanwhile, conventionally, as a means for releasing the electricity generated from a vehicle body to the outside, a method of allowing the electricity to escape into the ground via a tire is generally employed. However, further promoting the low loss of a rubber composition used in the tire causes an increase in the electrical resistance of the tire and the electricity is thus not released adequately, which results in, for example, radio noise and generation of static electricity at the time of opening or closing a door of a vehicle. The electrical resistance of a tire can be reduced by using a high-loss member as a part of a tire member; however, this causes problems, such as deterioration of the rolling resistance of the tire.

In this respect, conventionally, various attempts have been made to reduce the electrical resistance of a tire by arranging a conductive member in the tire. For example, Patent Document 1 discloses a tire including a conductive portion continuously extending at least from a bead portion to a belt layer, which conductive portion has a linear structure configured to include a conductive linear body obtained by molding a conductive substance having a prescribed electrical resistivity into a linear shape.

### RELATED ART DOCUMENT

### PATENT DOCUMENT

[Patent Document 1] JP2015-123900A (Claims, etc.). Attention is also drawn to the disclosures of WO2017/122821, EP2014488, EP1803589, JP2014 180868, EP2738022, JP2013193577, EP1997653, WP2017/122509 and US2009/114321.

JP 2014 180868 A discloses a pneumatic tire with an electrically conductive path from tread to bead, this tire does not comprise a belt-end cushion rubber between belt and carcass.

### SUMMARY OF THE INVENTION

### PROBLEMS TO BE SOLVED BY THE INVENTION

However, merely arranging a conductive fiber as in Patent Document 1 can secure only a part of a conductive path, which is not satisfactory in terms of reducing the electrical resistance of a tire as a whole while aiming for the further improvement of the low loss of a case member of the tire.

In view of the above, an object of the present invention is to provide a pneumatic tire which solves the above-described problems and in which the electrical resistance of the whole tire can be lowered even when the rolling resistance is further reduced by further improving the low loss of a case member of the tire.

### MEANS FOR SOLVING THE PROBLEMS

The present inventor intensively studied to discover that the above-described problems can be solved by adopting the below-described constitution, thereby completing the present invention.

That is, the present invention provides a pneumatic tire as claimed in claim 1.

When at least one belt layer is arranged between the carcass and the tread rubber and a belt-end cushion rubber is arranged between the belt layer and the carcass at a tire widthwise end of the belt layer, the conductive member may consist of the conductive fibers and the belt-end cushion rubber. In this case, the conductive fibers are preferably arranged in regions from the tire radial-direction inner end of the conductive rubber portion to the belt-end cushion rubber and from the belt-end cushion rubber to the rubber chafer.

Further, in the present invention, it is preferred that at least two conductive fibers be arranged in the whole tire. Still further, in the present invention, the rubber chafer preferably has a volume resistivity of 1 × 10¹⁰ Ω·cm or lower, a coating rubber of the belt layer preferably has a volume resistivity of 1 × 10⁸ Ω·cm or higher, and a coating rubber of the carcass preferably has a volume resistivity of 1 × 10⁸ Ω·cm or higher.

### EFFECTS OF THE INVENTION

According to the present invention, a pneumatic tire in which the electrical resistance of the whole tire can be lowered even when the rolling resistance is further reduced by further improving the low loss of a case member of the tire can be realized.

### BRIEF DESCRIPTION OF THE DRAWINGS

[FIG. 1] FIG. 1 is a half widthwise cross-sectional view illustrating one example of a pneumatic tire of the present invention.
[FIG. 2] FIG. 2 is an enlarged partial cross-sectional view illustrating the vicinity of a conductive rubber portion illustrated in FIG. 1.
[FIG. 3] FIG. 3 is an enlarged partial cross-sectional view illustrating the vicinity of a conductive rubber portion according to another variation of the arrangement mode of the conductive member.
[FIG. 4] FIG. 4 is an enlarged partial cross-sectional view illustrating the vicinity of a conductive rubber portion according to yet another variation of the arrangement mode of the conductive member.
[FIG. 5] FIG. 5 is an enlarged partial cross-sectional view illustrating the vicinity of a conductive rubber portion according to yet another variation of the arrangement mode of the conductive member.
[FIG. 6] FIG. 6 is an enlarged partial cross-sectional view illustrating the vicinity of a conductive rubber portion according to yet another variation of the arrangement mode of the conductive member.
[FIG. 7] FIG. 7 is an enlarged partial cross-sectional view illustrating the vicinity of a conductive rubber portion according to yet another variation of the arrangement mode of the conductive member.
[FIG. 8] FIG. 8 is an enlarged partial cross-sectional view illustrating the vicinity of a conductive rubber portion according to yet another variation of the arrangement mode of the conductive member.
[FIG. 9] FIG. 9 is an enlarged partial cross-sectional view illustrating the vicinity of a belt-end cushion rubber, corresponding to FIG. 3.
[FIG. 10] FIG. 10 is a half widthwise cross-sectional view illustrating an example of a pneumatic tire not according to the present invention but useful for understanding the present invention.
[FIG. 11] FIG. 11 is a drawing that illustrates the method used for measuring the electrical resistance value of a tire in Examples.

### MODE FOR CARRYING OUT THE INVENTION

Embodiments of the present invention will now be described in detail referring to the drawings.

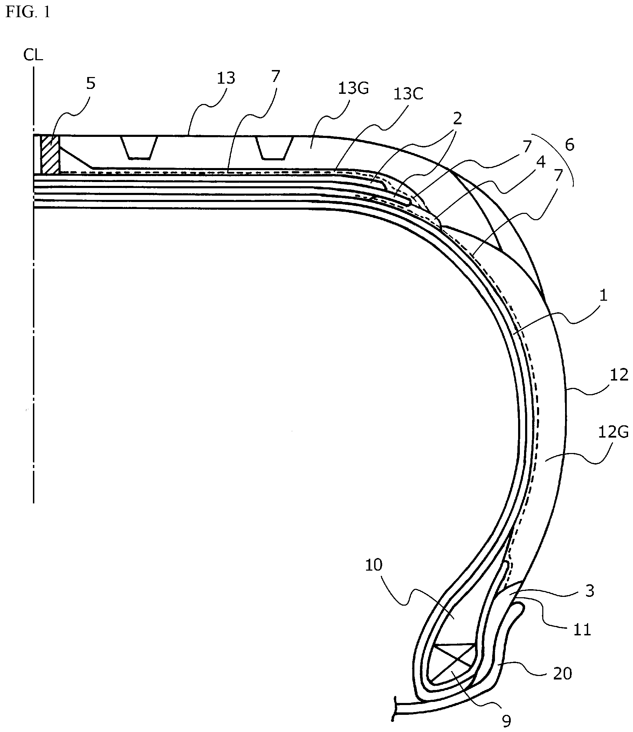

FIG. 1 is a half widthwise cross-sectional view illustrating one example embodiment of a pneumatic tire of the present invention. The illustrated pneumatic tire includes: a pair of bead portions 11; a pair of side wall portions 12, which continuously extend on a tire radial-direction outer side from the respective bead portions 11; and a tread portion 13, which extends between the pair of the side wall portions 12 and forms a ground-contact part. The illustrated tire has, as its skeleton, a carcass 1 which is composed of at least one carcass ply (e.g., one to three carcass plies; one carcass ply in the illustrated example) toroidally extending between the pair of the bead portions 11, and includes at least one belt layer 2 (e.g., two to four belt layers 2; two belt layers 2 in the illustrated example) arranged on the tire radial-direction outer side of the carcass 1 in a crown portion. Further, a rubber chafer 3 is arranged on a tire width-direction outer surface of each of the bead portions 11. Still further, on the tire radial-direction outer side of the belt layer 2, a cushion rubber 13C and a tread rubber 13G constituting a ground-contact surface are sequentially arranged, and a belt-end cushion rubber 4 is arranged between the belt layer 2 and the carcass 1 at a tire widthwise end of the belt layer 2. Yet still further, in the illustrated tire, a conductive rubber portion 5, which penetrates through the tread rubber 13G from a ground-contact region of the tire surface toward a tire radial-direction inner side, is arranged. A symbol CL represents the tire equator.

The tire of the present invention includes a conductive member 6, which electrically connects from a tire radial-direction inner end of the conductive rubber portion 5 to the rubber chafer 3 and has a volume resistivity of 1 × 10⁸ Ω·cm or lower, is arranged, and the conductive member 6 includes conductive fibers 7 at least in the vicinity of the tire radial-direction inner end of the conductive rubber portion 5 and the vicinity of the rubber chafer 3. By arranging the conductive member 6, in which the conductive fibers 7 are used at least partially, in such a manner that it can provide an electrical conduction from the tire radial-direction inner end of the conductive rubber portion 5 to the rubber chafer 3, a conductive path in the tire from the conductive rubber portion 5 coming into contact with a road surface to the rubber chafer 3 in contact with a rim 20 can be certainly secured. Consequently, a conductive path is secured even when the rolling resistance is reduced by achieving the low loss of a rubber composition used in a case member such as the belt layer 2 that is conventionally used as a conductive path; therefore, the electrical resistance of the whole tire can be reduced while ensuring low fuel consumption performance. In addition to the belt layer 2, examples of the case member include the carcass 1, the rubber chafer 3, the belt-end cushion rubber 4, a side rubber 12G, and a cap layer and a layered layer that are arranged on the tire radial-direction outer side of the belt layer 2 at a width covering the belt layer 2 (these layers are not illustrated in the drawings).

The conductive member 6 according to the present embodiment may be any member as long as it can provide an electrical conduction from the conductive rubber portion 5 to the rubber chafer 3 and at least parts thereof in the vicinity of the tire radial-direction inner end of the conductive rubber portion 5 and the vicinity of the rubber chafer 3 are composed of the conductive fibers 7. Specifically, the conductive member 6 may consist of a combination of the conductive fibers 7 and the belt-end cushion rubber 4. When the belt-end cushion rubber 4 is used in the conductive member 6, it is necessary to use a conductive rubber composition as the belt-end cushion rubber 4; therefore, a low loss thereof cannot be achieved.

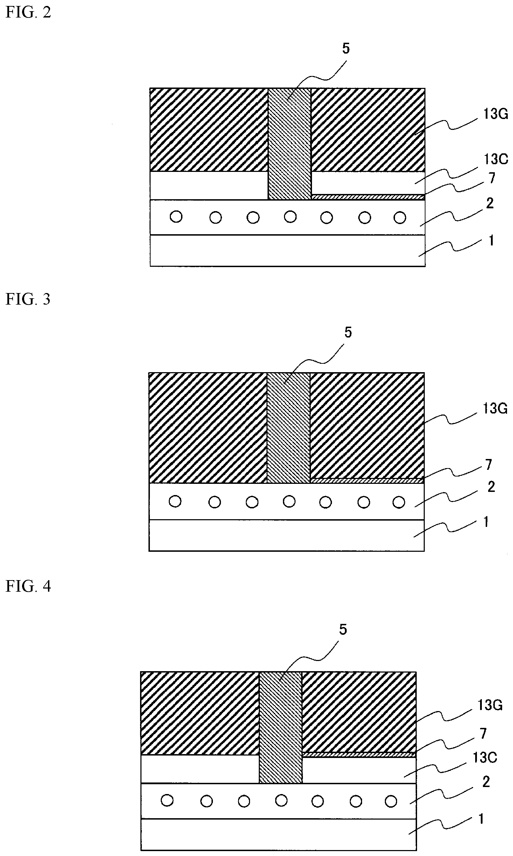

In the example illustrated in FIG. 1, the conductive member 6 is constituted by the conductive fibers 7 and the belt-end cushion rubber 4, and the conductive fibers 7 are arranged in regions from the tire radial-direction inner end of the conductive rubber portion 5 to the belt-end cushion rubber 4 and from the belt-end cushion rubber 4 to the rubber chafer 3. FIG. 2 is an enlarged partial cross-sectional view illustrating the vicinity of the conductive rubber portion 5 illustrated in FIG. 1. As illustrated in FIG. 2, in this case, the conductive fibers 7 are arranged between the belt layer 2 and the cushion rubber 13C in the tread portion.

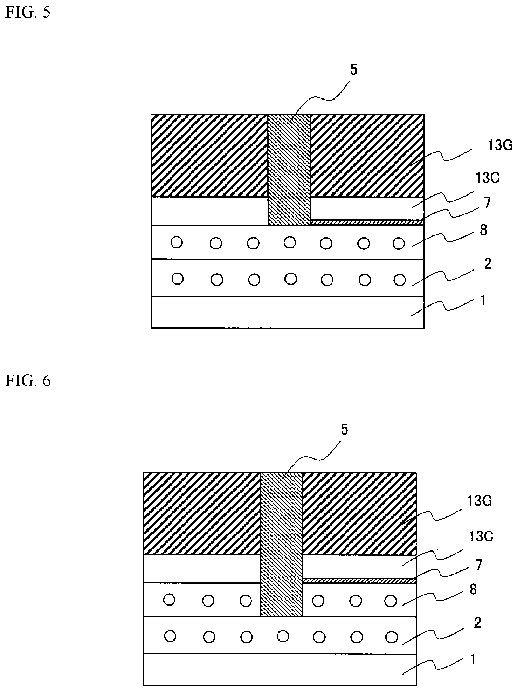

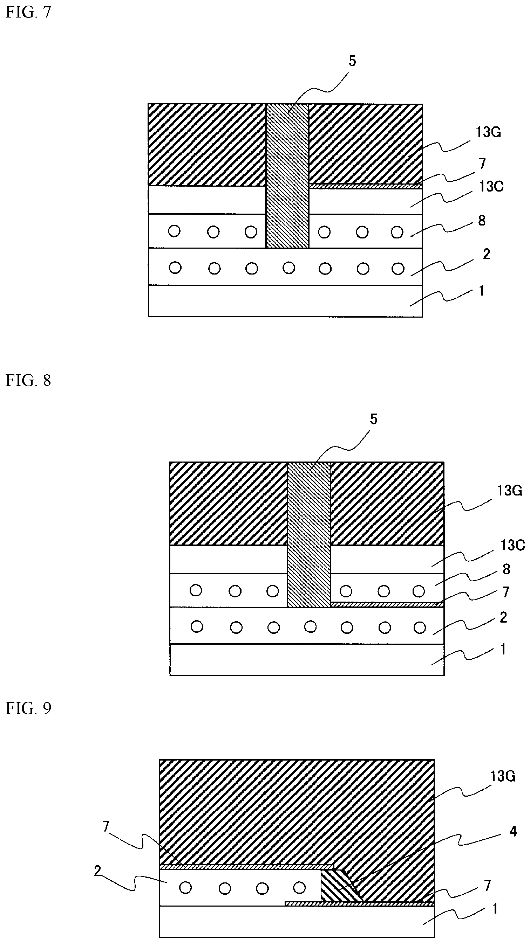

FIGs. 3 to 7 illustrate other variations of the arrangement mode of the conductive member according to embodiments of the present invention. FIG. 3 illustrates an example in which the cushion rubber 13C is not arranged, and the conductive fibers 7 are arranged between the belt layer 2 and the tread rubber 13G. In FIG. 4, the conductive fibers 7 are arranged between the cushion rubber 13C and the tread rubber 13G. FIG. 5 illustrates an example in which a cap layer 8 is arranged on the tire radial-direction outer side of the belt layer 2, and the conductive fibers 7 are arranged between the cap layer 8 and the cushion rubber 13C. FIG. 6 illustrates an example in which the cap layer 8 is arranged on the tire radial-direction outer side of the belt layer 2 with the conductive rubber portion 5 penetrating through the cap layer 8 and being in contact with the belt layer 2, and the conductive fibers 7 are arranged between the cap layer 8 and the cushion rubber 13C. FIG. 7 illustrates an example in which the cap layer 8 is arranged on the tire radial-direction outer side of the belt layer 2 with the conductive rubber portion 5 penetrating through the cap layer 8 and being in contact with the belt layer 2, and the conductive fibers 7 are arranged between the cushion rubber 13C and the tread rubber 13G. FIG. 8 illustrates an example in which the cap layer 8 is arranged on the tire radial-direction outer side of the belt layer 2 with the conductive rubber portion 5 penetrating through the cap layer 8 and being in contact with the belt layer 2, and the conductive fibers 7 are arranged between the belt layer 2 and the cap layer 8. The cap layer 8 is formed by winding a rubber-coated reinforcing cord substantially in the tire circumferential direction; therefore, the conductive rubber portion 5 can also be arranged in such a manner to be inserted between the wound reinforcing cords of the cap layer 8 as illustrated in FIGs. 6 to 8.

FIG. 9 is an enlarged partial cross-sectional view illustrating the vicinity of the belt-end cushion rubber 4, corresponding to FIG. 3. As illustrated in FIG. 9, in this case, the conductive fibers 7 are arranged between the belt layer 2 and the tread rubber 13G. The conductive fibers 7 extending from the tire radial-direction inner end of the conductive rubber portion 5 and the conductive fibers 7 extending from the rubber chafer 3 conduct with the belt-end cushion rubber 4 arranged at the tire widthwise end of the belt layer 2, whereby a conductive path is secured.

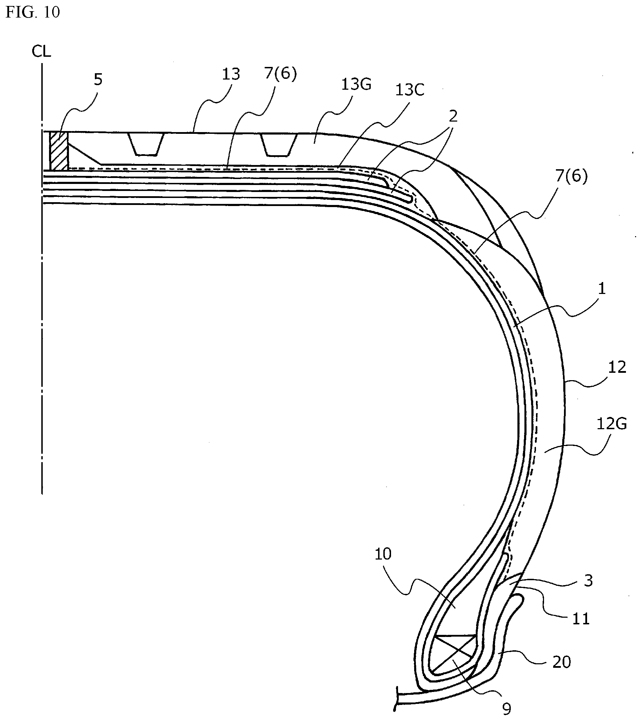

FIG. 10 is a half widthwise cross-sectional view illustrating an example of a pneumatic tire not according to the present invention, but useful for understanding the present invention. FIG. 10 is the same as FIG. 1 except that the conductive member consists of only conductive fibers; therefore, descriptions of common parts are omitted. In the illustrated arrangement mode, since the conductive fibers 7 alone can provide an electrical conduction from the conductive rubber portion 5 to the rubber chafer 3, the belt-end cushion rubber 4 does not have to be arranged, and a low loss can be attained even when the belt-end cushion rubber 4 is arranged. The conductive member 6 may be arranged on the inner side of the side rubber 12G in a region farther on the tire radial-direction inner side than the tire widthwise end of the belt layer 2.

In the present example, the conductive member 6 may consist of the conductive fibers 7 alone, or a combination of the conductive fibers 7 and the belt-end cushion rubber 4. When the conductive member 6 consists of only the conductive fibers 7, there is an advantage that a reduction in the weight can be attained. From the standpoint of the degree of freedom in molding, it is also possible to constitute the conductive member 6 by joining plural separated members.

The conductive fibers 7 may be arranged between the members in the form of fibers as they are, or in the form of an assembly thereof, such as a woven fabric or a knitted fabric. Specifically, at the time of molding, the conductive fibers 7 may be arranged by being pasted onto the raw rubber surface of any of the members, or may be arranged between the members in the form of a rubber-coated sheet, and the arrangement conditions are not particularly restricted.

The conductive member 6 according to the present invention is required to have a volume resistivity of 1 × 10⁸ Ω·cm or lower, preferably 1 × 10⁷ Ω·cm or lower, and the lower the volume resistivity, the more preferable. When the volume resistivity of the conductive member 6 is higher than 1 × 10⁸ Ω·cm, the electrical resistance of the whole tire cannot be reduced sufficiently. In cases where the conductive member 6 is constituted by plural members, it is required that the plural members each have a volume resistivity of 1 × 10⁸ Ω·cm or lower.

The resistivity of the conductive fibers 7 in terms of wire resistivity, which is the resistance per unit length, is preferably 1 × 10⁷ Q/cm or lower, more preferably 1 × 10³ Q/cm or lower, and the lower the resistivity, the more preferable. By controlling the wire resistivity of the conductive fibers 7 to be 1 × 10⁷ Q/cm or lower, an effect of reducing the electrical resistance of the tire can be favorably obtained.

The conductive fibers 7 may have any structure, and different kinds of conductive fibers may be used in combination. Preferably, as the conductive fibers 7, composite fibers, each having a conductive part and a non-conductive part, can be used. Specific examples of the conductive part constituting each conductive fiber 7 include a metal-containing fiber, a carbon-containing fiber and a metal oxide-containing fiber, and any one or more thereof can be used. In the present invention, the "metal-containing fiber" refers to a fiber having a metal content of 5 to 100% by mass, and examples of the metal and the metal oxide include stainless steel, steel, aluminum, copper, and oxides thereof. Further, examples of the non-conductive part include an organic material, such as cotton, nylon, a polyester (e.g., polyethylene terephthalate (PET)) and a polypropylene (PP), and any one or more thereof can be used. Composite fibers composed of such conductive part and non-conductive part exhibit favorable elongation and have excellent adhesiveness; therefore, they are not broken even when a stress is applied thereto in the tire production process or a strain is input thereto during travel of a vehicle, and can thus be preferably used as the conductive fibers 7.

The mass ratio of the conductive part in each of the conductive fibers 7 used in the present invention is not particularly restricted; however, in embodiments it is preferably 10 to 90% by mass, more preferably 15 to 85% by mass. By incorporating the non-conductive part at such a ratio, a favorable elongation of the conductive fibers 7 can be ensured and, by incorporating the conductive part at the above-described ratio, an effect of reducing the electrical resistance of the tire can be favorably obtained, both of which are preferred.

As the conductive fibers 7 in embodiments of the present invention, specifically, for example, BEKINOX (registered trademark) manufactured by Bekaert Corporation and CLACARBO (registered trademark) KC-500R and KC-793R manufactured by Kuraray Trading Co., Ltd. can be used.

From the standpoint of satisfying the below-described air release performance, electrical conductivity and durability at the same time, the fineness of the conductive fibers 7 is preferably 20 to 3,000 dtex, more preferably 100 to 1,000 dtex, still more preferably 150 to 600 dtex.

In embodiments of the present invention, when the conductive fibers 7 are arranged in the form of fibers as they are, the conductive fibers 7 may be arranged linearly, or in a zigzag shape or an undulating shape. Further, in embodiments of the present invention, a conductive path from the tread portion 13 to each bead portion 11 can be secured as long as the conductive fibers 7 are inclined with respect to the tire circumferential direction, and the conductive fibers 7 are arranged in such a manner to extend in a direction of preferably 60° to 120°, more preferably 70° to 110°, with respect to the tire circumferential direction. Particularly, the conductive fibers 7 are arranged in such a manner to extend in the tire width direction. When the conductive fibers 7 are arranged in a zigzag shape or an undulating shape, the direction in which the conductive fibers 7 extend as a whole is defined as the extending direction of the conductive fibers.

In embodiments of the present invention, the conductive fibers 7 can be arranged in place of bleeder cords that are conventionally arranged for the purpose of removing air during tire vulcanization. A bleeder cord, which is a cord member arranged on one or both sides of a carcass or a belt layer for the purpose of reducing an inflation defect occurring in the tire production process, is generally composed of a cotton yarn or a polyester yarn. By arranging a bleeder cord, the air incorporated into the tire during the tire production process adsorbs to or permeates through the bleeder cord, whereby the occurrence of an inflation defect can be reduced. By replacing some or all of bleeder cords arranged on the carcass with the conductive fibers 7, an effect attributed to the conductive fibers 7 can be obtained without an addition of a new member. As a matter of course, the expected effects of the present invention can also be obtained by leaving the bleeder cords as they are and additionally arranging the conductive fibers 7.

When the conductive fibers 7 are arranged in place of conventional bleeder cords, the conductive fibers 7 may replace 10 to 100% by mass, preferably 20 to 50% by mass of the bleeder cords. The expected effects of embodiments of the present invention can be certainly obtained by replacing such a number of bleeder cords with the conductive fibers 7.

The conductive fibers 7 used in embodiments of the present invention may be either spun yarns or filament yarns, and are preferably spun yarns (blended yarns) obtained by spinning short fibers. In order to ensure adhesion between the conductive fibers 7 and a rubber, it is necessary to perform a dipping treatment, which uses an adhesive agent for ensuring adhesion between organic fibers and a rubber, on the conductive fibers 7; however, the formation of a surface coating of such an adhesive agent on the conductive fibers 7 by the dipping treatment leads to deterioration of the air release performance through the conductive fibers 7. Accordingly, when the conductive fibers 7 are arranged in place of bleeder cords, it is preferred to perform the dipping treatment for only a part of each conductive fiber 7, and it is more preferred not to perform the dipping treatment. Nevertheless, in the absence of a surface coating of an adhesive agent, a small adhesive force between the conductive fibers 7 and an unvulcanized rubber may cause the conductive fibers 7 to fall off during the production. In this case, it is preferred to use spun yarns (blended yarns) since adhesion thereof with a rubber can be ensured because of an anchoring effect of short fibers even without a dipping treatment, and the air release performance can be maintained while securing a conductive path. In the case of using filament yarns, the filament yarns are preferably twisted so as to maintain the air release performance and, in this case, the number of twists is preferably not less than 10 times/10 cm and may be, for example, 30 to 60 times/10 cm.

Meanwhile, when some of the bleeder cords are replaced with the conductive fibers 7, since the air release performance can be ensured by the remaining bleeder cords composed of cotton yarns, the adhesion with a rubber and the air release performance can both be satisfied even if the conductive fibers 7 have been subjected to a dipping treatment. Therefore, in embodiments of the present invention, a dipping treatment may be performed on the conductive fibers 7; however, from the standpoint of securing the degree of freedom in design such as replacement of all bleeder cords with the conductive fibers 7, a dipping treatment is preferably not performed on the conductive fibers 7.

From the standpoint of certainly securing a conductive path over the entire tire circumferential direction, it is preferred that at least two conductive fibers 7 be arranged in the whole tire.

In embodiments of the present invention, by arranging the above-described conductive member 6, the electrical resistance of the tire can be reduced even when, for example, the volume resistivity of the coating rubber of the belt layer 2 is reduced in loss to 1 × 10⁸ Ω·cm or higher, particularly about 1 × 10¹⁰ Ω·cm to 1 × 10¹³ Ω·cm, or the volume resistivity of the coating rubber of the carcass 1 is reduced in loss to 1 × 10⁸ Ω·cm or higher, particularly about 1 × 10¹⁰ Ω·cm to 1 × 10¹³ Ω·cm.

In embodiments of the present invention, the volume resistivity of the rubber chafer 3 is preferably 1 × 10¹⁰ Ω·cm or lower, more preferably 1 × 10⁸ Ω·cm or lower, still more preferably 1 × 10⁷ Ω·cm or lower, and the lower the volume resistivity, the more preferable. By controlling the volume resistivity of the rubber chafer 3 to be in the above-described range, an effect of reducing the electrical resistance of the tire can be favorably obtained.

In embodiments of the present invention, as illustrated in the drawings, the conductive rubber portion 5 can usually be arranged in the vicinity of the tire equator CL over the entirety of the tire circumference, at least from the tread ground-contact surface to the tire radial-direction inner surface of the tread rubber 13G. In other words, the conductive rubber portion 5 is arranged in such a manner to penetrate the tread rubber 13G from the tread ground-contact surface and forms a conductive path from the road surface to the inside of the tire.

Further, in embodiments of the present invention, the cushion rubber 13C is a rubber member which can be arranged between the tread rubber 13G and the coating rubber of the belt layer 2 (when a cap layer is arranged, a coating rubber of the cap layer) at least on the tire equator CL. The cushion rubber 13C usually extends to the vicinity of each tire shoulder portion and is covered with the tread rubber 13G and, depending on the arrangement mode, the side rubber 12G as well; therefore, the cushion rubber 13C is a rubber member that is not exposed on the tire outer surface.

In embodiments of the present invention, what is important is only that a prescribed conductive member is arranged and, this enables to obtain the expected effects of the present invention. Other parts of the tire structure are not particularly restricted and can be configured as appropriate in accordance with a conventional method.

For example, in the illustrated tire, the carcass 1 is folded and rolled up from the tire inner side to the outer side around bead cores 9 each embedded in the pair of the bead portions 11, and a bead filler 10 having a tapering cross-sectional shape is arranged on the tire radial-direction outer side of each bead core 9. Further, although not illustrated in the drawings, in the tire of the present invention, as required, a cap layer covering the entirety of the belt layer 2 and/or a layered layer covering only the end portions of the belt layer 2 may each be arranged in one or more layers on the tire radial-direction outer side of the belt layer 2. The cap layer and the layered layer are each usually formed by winding one or more rubber-coated reinforcing cords substantially in the tire circumferential direction. Moreover, an inner liner is usually arranged on the innermost surface of the tire, although this is not illustrated in the drawings.

### EXAMPLES

The present invention will now be described in more detail by way of Examples thereof.

A pneumatic tire having a tire size of 195/65R15, which had a carcass composed of a single carcass ply toroidally extending between a pair of bead portions as a skeleton and included two belt layers, a cushion rubber and a tread rubber that were sequentially arranged on the tire radial-direction outer side of the carcass in a crown portion, and in which a rubber chafer (volume resistivity: 1 × 10⁸ Ω·cm) was arranged on the tire width-direction outer surfaces of the bead portions, was produced. In this pneumatic tire, a cap layer was arranged on the tire radial-direction outer side of the belt layers at a width covering the belt layers, a belt-end cushion rubber (volume resistivity: 1 × 10⁷ Ω·cm) was arranged between the belt layers and the carcass at a tire widthwise end of the belt layers, and a conductive rubber portion (volume resistivity: 1 × 10⁴ Ω·cm) was arranged in a tread portion in such a manner to penetrate through the tread rubber from a ground-contact region of the tire surface toward the tire radial-direction inner side.

A coating rubber of the carcass had a volume resistivity of 1 × 10¹² Ω·cm while a coating rubber of the belt layer had a volume resistivity of 1 × 10¹⁰ Ω·cm, and a low-loss rubber composition was used for both of these coating rubbers.

Test tires of Examples and Comparative Examples were produced by arranging conductive fibers in accordance with the respective conditions shown in the table below. As the conductive fibers, BEKINOX (registered trademark, polyester-metal fiber blended yarn) manufactured by Bekaert Corporation, which is a conductive fiber having a wire resistivity of 50 Q/cm and a fiber diameter of 400 dtex, was used, and the conductive fibers were arranged at 50-mm intervals along the tire circumferential direction in such a manner to extend in the tire width direction.

For each of the thus obtained test tires, the electrical resistance value was evaluated as described below. The results thereof are shown in Table 1 below.

### (Electrical Resistance Value)

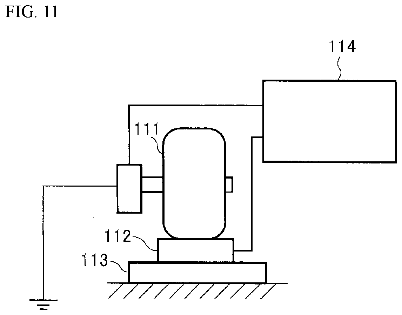

As illustrated in FIG. 11, the electrical resistance value of each tire was measured in accordance with WdK 110 sheet 3 of GERMAN ASSOCIATION OF RUBBER INDUSTRY using a model HP4394A High Resistance Meter manufactured by Hewlett-Packard Company. In FIG. 11, symbols 111, 112, 113 and 114 represent the tire, a steel sheet, an insulator and the high resistance meter, respectively, and the measurement was performed by applying an electric current of 1,000 V between the steel sheet 112 on the insulator 113 and the rim of the tire 111.

The smaller the electrical resistance value of the tire, the more favorable it is.

### (Rolling Resistance)

The rolling resistance of each tire was measured in accordance with SAE J1269 using a rolling resistance tester. The results thereof are presented below as index values based on Comparative Example 1. A larger numerical value indicates more favorable rolling resistance performance.

The results of the above measurements are shown together in Table 1 below.

**[Table 1]**

| | | Comp. Example 1 | Comp. Example 2 | Comp. Example 3 | Example 1 | Example 2 | Example 3 | Example 4 |
|---|---|---|---|---|---|---|---|---|
| Low loss of coating rubber of cap layer*¹ | | none | present | present | present | present | present | present |
| Low loss of cushion rubber*² | | none | none | present | present | present | present | present |
| Arrangement conditions of conductive fibers | Between tire radial-direction inner end of conductive rubber portion and belt-end cushion rubber | - | - | - | present | - | present | - |
| | Between belt-end cushion rubber and rubber chafer | present | present | present | present | | present | |
| | Between tire radial-direction inner end of conductive rubber portion and rubber chafer | - | - | - | - | present | - | present |
| Arrangement mode of conductive fibers | | - | - | - | FIG. 1 | FIG. 10*³ | FIG. 1 | FIG. 10*³ |
| | | | | | FIG. 5 | FIG. 6 | FIG. 8 | FIG. 7 |
| Tire electrical resistance (Ω·cm) | | 5.2 × 10⁶ | 5.6 × 10⁶ | 7.5 × 10⁸ | 4.3 × 10⁶ | 2.5 × 10⁶ | 4.3 × 10⁶ | 2.5 × 10⁶ |
| Tire rolling resistance (index) | | 100 | 101 | 103 | 103 | 103 | 103 | 103 |

| | | | | | | | | |
|---|---|---|---|---|---|---|---|---|
| *¹⁾ A case where the coating rubber of the cap layer had a volume resistivity of 1 × 10⁷ Ω·cm is denoted as "none", while a case where the coating rubber of the cap layer had a volume resistivity of 1 × 10¹² Ω·cm is denoted as "present". *²⁾ A case where a cushion rubber having a volume resistivity of 1 × 10⁷ Ω·cm was used is denoted as "none", while a case where a cushion rubber having a volume resistivity of 1 × 10¹² Ω·cm was used is denoted as "present". *³⁾ A mode in which a belt-end cushion rubber was not arranged. | | | | | | | | |

As shown in Table 1 above, it was confirmed that, by arranging a prescribed conductive member in such a manner that it can provide an electrical conduction from the tire radial-direction inner end of the conductive rubber portion to the rubber chafer, a conductive path of a tire can be ensured and an increase in the electrical resistance of the tire can be inhibited even when a low loss of the coating rubber of the cap layer and the cushion rubber is achieved.

### DESCRIPTION OF SYMBOLS

1: carcass
2: belt layer
3: rubber chafer
4: belt-end cushion rubber
5: conductive rubber portion
6: conductive member
7: conductive fiber
8: cap layer
9: bead core
10: bead filler
11: bead portion
12: side wall portion
12G: side rubber
13: tread portion
13G: tread rubber
13C: cushion rubber
20: rim
111: tire
112: steel sheet
113: insulator
114: high resistance meter

## Claims

1. A pneumatic tire (111) comprising:
a carcass (1) composed of at least one carcass ply toroidally extending between a pair of bead portions (11), as a skeleton;
a tread rubber (13) arranged on a tire radial-direction outer side of the carcass in a crown portion;
a conductive rubber portion (5) arranged in such a manner to penetrate through the tread rubber from a ground-contact region of a tire surface toward a tire radial-direction inner side; and
a rubber chafer (3) arranged on a tire width-direction outer surface of each of the bead portions,
wherein
a conductive member (6) that electrically connects from a tire radial-direction inner end of the conductive rubber portion to the rubber chafer is arranged,
the conductive member comprises conductive fibers at least in the vicinity of the tire radial-direction inner end of the conductive rubber portion and the vicinity of the rubber chafer,
the conductive member has a volume resistivity of 1 × 10⁸ Ω·cm or lower,
at least one belt layer (2) is arranged between the carcass and the tread rubber, the pneumatic tire is **characterized in that**
a belt-end cushion rubber (4) is arranged between the belt layer and the carcass at a tire widthwise end of the belt layer, and
the conductive member comprises the conductive fibers and the belt-end cushion rubber.

2. The pneumatic tire according to claim 1, wherein the conductive fibers are arranged in regions from the tire radial-direction inner end of the conductive rubber portion to the belt-end cushion rubber and from the belt-end cushion rubber to the rubber chafer.

3. The pneumatic tire according to any preceding claim, wherein at least two conductive fibers are arranged in the whole tire.

4. The pneumatic tire according to any preceding claim, wherein the rubber chafer has a volume resistivity of 1 × 10¹⁰ Ω·cm or lower.

5. The pneumatic tire according to any preceding claim, wherein a coating rubber of the belt layer has a volume resistivity of 1 × 10⁸ Ω·cm or higher.

6. The pneumatic tire according to any preceding claim, wherein a coating rubber of the carcass has a volume resistivity of 1 × 10⁸ Ω·cm or higher.

## Patentansprüche

1. Luftreifen (111), der Folgendes umfasst:
eine Karkasse (1), die aus mindestens einer Karkassenlage zusammengesetzt ist, die sich kreisringförmig zwischen einem Paar von Wulstabschnitten (11) erstreckt, als ein Skelett,
einen Laufflächengummi (13), der auf einer in Reifenradialrichtung äußeren Seite der Karkasse in einem Scheitelabschnitt angeordnet ist,
einen leitfähigen Gummiabschnitt (5), der auf eine solche Weise angeordnet ist, dass er von einem Bodenberührungsbereich einer Reifenoberfläche hin zu einer in Reifenradialrichtung inneren Seite durch den Laufflächengummi hindurchdringt, und
ein Gummiwulstschutzband (3), das auf einer in Reifenbreitenrichtung äußeren Oberfläche jedes der Wulstabschnitte angeordnet ist,
wobei
ein leitfähiges Element (6), das von einem in Reifenradialrichtung inneren Ende des leitfähigen Gummiabschnitts bis zu dem Gummiwulstschutzband elektrisch verbindet, angeordnet ist,
das leitfähige Element leitfähige Fasern mindestens in der Nähe des in Reifenradialrichtung inneren Endes des leitfähigen Gummiabschnitts und der Nähe des Gummiwulstschutzbandes umfasst,
das leitfähige Element einen spezifischen Durchgangswiderstand von 1 × 10⁸ Ω·cm oder niedriger aufweist,
mindestens eine Gürtellage (2) zwischen der Karkasse und dem Laufflächengummi angeordnet ist,
der Luftreifen **dadurch gekennzeichnet ist, dass**
ein Gürtelend-Polstergummi (4) zwischen der Gürtellage und der Karkasse an einem Reifenbreitenende der Gürtellage angeordnet ist, und
das leitfähige Element die leitfähigen Fasern und den Gürtelend-Polstergummi umfasst.

2. Luftreifen nach Anspruch 1, wobei die leitfähigen Fasern in Bereichen von dem in Reifenradialrichtung inneren Ende des leitfähigen Gummiabschnitts bis zu dem Gürtelend-Polstergummi und von dem Gürtelend-Polstergummi bis zu dem Gummiwulstschutzband angeordnet sind.

3. Luftreifen nach einem der vorhergehenden Ansprüche, wobei mindestens zwei leitfähige Fasern in dem gesamten Reifen angeordnet sind.

4. Luftreifen nach einem der vorhergehenden Ansprüche, wobei das Gummiwulstschutzband einen spezifischen Durchgangswiderstand von 1 × 10¹⁰ Ω·cm oder niedriger aufweist.

5. Luftreifen nach einem der vorhergehenden Ansprüche, wobei ein Überzugsgummi der Gürtellage einen spezifischen Durchgangswiderstand von 1 × 10⁸ Ω·cm oder höher aufweist.

6. Luftreifen nach einem der vorhergehenden Ansprüche, wobei ein Überzugsgummi der Karkasse einen spezifischen Durchgangswiderstand von 1 × 10⁸ Ω·cm oder höher aufweist.

## Revendications

1. Bandage pneumatique (111) comprenant :
une carcasse (1) composée d'au moins une nappe de carcasse s'étendant de manière toroïdale entre une paire de parties de talon (11), à titre d'ossature,
une gomme de bande de roulement (13) agencée sur un côté extérieur dans le sens radial du pneumatique de la carcasse dans une partie de sommet,
une partie de caoutchouc conducteur (5) agencée de manière à pénétrer à travers la gomme de bande de roulement à partir d'une région de contact avec le sol d'une surface de pneumatique vers un côté intérieur dans le sens radial du pneumatique, et
une bandelette-talon de caoutchouc (3) agencée sur une surface extérieure dans le sens de la largeur du pneumatique de chacune des parties de talon,
dans lequel
un élément conducteur (6) qui connecte électriquement d'une extrémité intérieure dans le sens radial du pneumatique de la partie de caoutchouc conducteur jusqu'à la bandelette-talon de caoutchouc est agencé,
l'élément conducteur comprend des fibres conductrices au moins dans le voisinage de l'extrémité intérieure dans le sens radial du pneumatique de la partie de caoutchouc conducteur et le voisinage de la bandelette-talon de caoutchouc,
l'élément conducteur a une résistivité transversale inférieure ou égale à 1 × 10⁸ Ω·cm,
au moins une couche de ceinture (2) est agencée entre la carcasse et la gomme de bande de roulement,
le bandage pneumatique est **caractérisé en ce que**
un caoutchouc de coussin d'extrémité de ceinture (4) est agencé entre la couche de ceinture et la carcasse au niveau d'une extrémité dans le sens de largeur du pneumatique de la couche de ceinture, et
l'élément conducteur comprend les fibres conductrices et le caoutchouc de coussin d'extrémité de ceinture.

2. Bandage pneumatique selon la revendication 1, dans lequel les fibres conductrices sont disposées dans des régions à partir de l'extrémité intérieure dans le sens radial du pneumatique de la partie de caoutchouc conducteur jusqu'au caoutchouc de coussin d'extrémité de ceinture et à partir du caoutchouc de coussin d'extrémité de ceinture jusqu'à la bandelette-talon de caoutchouc.

3. Bandage pneumatique selon l'une quelconque des revendications précédentes, dans lequel au moins deux fibres conductrices sont disposées dans l'ensemble du pneumatique.

4. Bandage pneumatique selon l'une quelconque des revendications précédentes, dans lequel la bandelette-talon de caoutchouc a une résistivité transversale inférieure ou égale à 1 × 10¹⁰ Ω·cm.

5. Bandage pneumatique selon l'une quelconque des revendications précédentes, dans lequel un caoutchouc de revêtement de la couche de ceinture a une résistivité transversale égale ou supérieure à 1 × 10⁸ Ω·cm.

6. Bandage pneumatique selon l'une quelconque des revendications précédentes, dans lequel un caoutchouc de revêtement de la carcasse a une résistivité transversale égale ou supérieure à 1 × 10⁸ Ω·cm.
